# FASCICULE DE BREVET EUROPEEN

(11) **EP 3 625 393 B1**
(45) Date de publication et mention de la délivrance du brevet: **02.03.2022**
(21) Numéro de dépôt: 18725841.3
(22) Date de dépôt: 18.05.2018
(51) Int. Cl.: E02B 3/06, E02B 3/10

(54) **DISPOSITIF DE PROTECTION DU LITTORAL CONTRE LES RISQUES DE SUBMERSION MARINE COMPRENANT UNE FACE AVANT INCURVEE ET DIGUE DE PROTECTION COMPRENANT UNE PLURALITE DE DISPOSITFS DE PROTECTION ALIGNES**
VORRICHTUNG ZUM SCHUTZ DER KÜSTE VOR DEM RISIKO EINER MEERESÜBERFLUTUNG, EINE GEKRÜMMTE FRONTFLÄCHE UMFASSEND; UND SCHUTZDAMM, MEHRERE AUSGERICHTETE SCHUTZVORRICHTUNGEN UMFASSEND
DEVICE FOR PROTECTING THE SHORELINE AGAINST THE RISKS OF SUBMERGENCE FROM THE SEA, COMPRISING A CURVED FRONT FACE AND PROTECTIVE DIKE COMPRISING A PLURALITY OF ALIGNED PROTECTION DEVICES

(30) Priorité: 19.05.2017 FR 1754443
(43) Date de publication de la demande: 25.03.2020
(73) Titulaire: Chapron, Romain, 64600 Anglet (FR)
(72) Inventeur: Chapron, Romain, 64600 Anglet (FR)
(74) Mandataire: Fantin, Laurent
(86) Numéro de dépôt international: PCT/EP2018/063162
(87) Numéro de publication internationale: WO 2018/211094

(56) Documents cités:
- WO-A1-2013/157922
- WO-A2-2009/045030
- FR-A- 1 604 449
- US-A1- 2012 308 305
- US-A1- 2015 240 435

## Description

La présente demande se rapporte à un dispositif de protection du littoral contre les risques de submersion marine comprenant une face avant incurvée ainsi qu'à une digue de protection comprenant une pluralité de dispositifs de protection alignés.

Le phénomène de submersion marine survient lorsque plusieurs facteurs se combinent, à savoir un coefficient de marée important, une surélévation du niveau de l'eau (appelée surcote) en raison d'une valeur basse de la pression atmosphérique et le déferlement de vagues sur le littoral en raison d'une forte houle et/ou d'un vent fort en direction du littoral. Ainsi, le phénomène de submersion marine intervient sur une période courte, autour de la marée haute.

D'autres facteurs peuvent aggraver ce phénomène, comme par exemple la configuration des fonds marins, la modification du trait de côte, l'élévation du niveau de l'océan, la distance de sécurité réduite pour es ouvrages anciens,....

Ainsi, le phénomène de submersion marine peut impacter les secteurs du littoral différemment les uns des autres (en fonction de la configuration des fonds marins). De plus, l'impact du phénomène de submersion marine sur un secteur donné du littoral peut évoluer au cours du temps en raison de l'évolution de la configuration des fonds marins. Ainsi, un secteur fortement impacté peut ne plus l'être quelques temps plus tard ou un secteur qui ne l'était pas peut le devenir.

Une première solution pour protéger le littoral contre un tel phénomène consiste à ériger une digue permanente. Cependant, cette solution n'est pas pertinente car elle a un fort impact sur l'environnement, notamment sur le plan esthétique, et un prix de revient très élevé. Elle est d'autant moins pertinente que le phénomène de submersion marine est très éphémère, par exemple quelques heures (5 à 6 heures par jour), quelques jours dans l'année et que son impact peut évoluer au cours du temps.

Une deuxième solution consiste à remplir de sable des sacs de grande contenance, appelés également « big-bags », et à les aligner les uns contre les autres à l'avant du secteur du littoral à protéger.

Cette solution temporaire est mise en place entre deux marées, à l'avant du secteur à protéger.

Cette deuxième solution est intéressante car elle est beaucoup moins onéreuse que la précédente et ne nuit pas à l'esthétique du littoral car elle est amovible. Selon un autre aspect, elle peut être positionnée de manière adéquate en fonction de la zone à protéger et ce grâce à son caractère modulable.

Malgré ces avantages, cette deuxième solution n'est pas pleinement satisfaisante car elle ne garantit pas une protection optimale. Ainsi, les différents sacs peuvent, en raison de l'impact des paquets d'eau, bouger et légèrement se soulever, se déchirer et s'affaisser. En cas de déplacement ou de destruction de certains sacs, la ligne de protection formée par les sacs n'est plus continue et des brèches peuvent apparaître, laissant les zones en face de ces brèches sans protection en augmentant le phénomène de surcote et d'inondation.

Le document US2012308305 décrit un dispositif pour lutter contre l'érosion d'une côte. Ce dispositif qui peut s'installer au pied d'une dune de sable comprend en partie inférieure une paroi courbe qui tend à faire monter la vague et à protéger le pied de la dune de sable. Comme le document précédent, le document WO2009045030 décrit une digue qui présente une paroi courbe qui tend seulement à faire monter la vague. Les dispositifs décrits dans ces deux documents n'ont pas une géométrie optimale pour absorber l'énergie des vagues.

Le document FR1604449 décrit une digue avec une paroi courbe en partie supérieure qui tend à refouler la vague dans la direction du reflux. Cette digue présente un pied vertical. Cette géométrie n'est pas optimale pour absorber l'énergie des vagues.

La présente invention vise à remédier aux inconvénients de l'art antérieur.

A cet effet, l'invention a pour objet un dispositif de protection configuré pour être aligné avec d'autres dispositifs de protection de manière à former une digue de protection, caractérisé en ce que le dispositif de protection comprend :
- une plaque ou une coque rigide qui présente une face avant incurvée et configurée pour dévier l'eau d'une vague vers le haut puis la rejeter dans la direction du reflux de la vague, et
- au moins un sac de grande contenance lesté positionné à l'arrière de la face avant incurvée,
la plaque ou la coque rigide étant associée au sac de grande contenance lesté.

La forme incurvée de la face avant du dispositif de protection permet, à masse ou volume égal de lest, d'augmenter l'énergie de la vague absorbée et de limiter l'impact des vagues.

Selon un autre avantage, les dispositifs de protection permettent de former une digue modulable, amovible et non permanente.

D'autres caractéristiques et avantages ressortiront de la description de l'invention qui va suivre, description donnée à titre d'exemple uniquement, en regard des dessins annexés sur lesquels :
- La figure 1 est un schéma illustrant une zone du littoral sans protection à un premier niveau d'alerte,
- La figure 2 est un schéma illustrant la même zone du littoral sans protection à un deuxième niveau d'alerte, plus élevé que le premier,
- La figure 3 est un schéma illustrant la même zone du littoral avec une protection conforme à l'invention, au deuxième niveau de protection,
- La figure 4 est une coupe transversale d'un dispositif de protection qui illustre l'invention,
- La figure 5 est un schéma qui illustre différentes portions de courbe de la face avant d'un dispositif de protection,
- La figure 6 est une vue en perspective d'un dispositif de protection équipé d'une rehausse qui illustre un mode de réalisation de l'invention,
- La figure 7 est une vue en perspective d'une digue de protection formée de plusieurs dispositifs de protection alignés,
- La figure 8 est une vue en perspective d'un dispositif de protection qui illustre un premier mode de réalisation de l'invention,
- La figure 9 est une vue en perspective d'un déflecteur du dispositif de protection visible sur la figure 8,
- La figure 10 est une coupe selon la ligne X-X de la figure 9,
- La figure 11 est une vue en perspective d'un dispositif de protection qui illustre un deuxième mode de réalisation de l'invention,
- La figure 12 est une coupe selon la ligne XII-XII de la figure 11,
- La figure 13 est une vue arrière d'un dispositif de protection,
- La figure 14 est un détail de la figure 13,
- La figure 15 est une coupe qui illustre la partie supérieure d'un dispositif de protection équipé d'un couvercle,
- La figure 16 est une vue en perspective d'un dispositif de protection qui illustre un troisième mode de réalisation,
- La figure 17 est une vue en perspective d'un dispositif de protection qui illustre un quatrième mode de réalisation,
- La figure 18 est une vue en perspective d'une digue de protection formée de plusieurs dispositifs de protection visibles sur la figure 17,
- La figure 19 est une coupe d'une digue de protection qui illustre la combinaison de plusieurs dispositifs de protection,
- La figure 20 est une coupe transversale du dispositif visible sur la figure 16 à l'état déployé,
- La figure 21 est une coupe du dispositif visible sur la figure 16 à l'état replié,
- La figure 22 est une vue de côté du dispositif de protection visible sur la figure 8 qui illustre une variante du premier mode de réalisation,
- La figure 23 est une coupe d'un dispositif de protection fixé sur un bâtiment qui illustre un mode de réalisation non-revendiqué,
- La figure 24 est une vue en perspective d'un dispositif de protection qui illustre une variante du mode de réalisation visible sur la figure 9,
- La figure 25 est une coupe d'un dispositif de protection qui illustre un autre mode de réalisation de l'invention, et
- Les figures 26A et 26B sont des vues de faces d'un système de liaison de deux dispositifs de protection qui illustrent un mode de réalisation de l'invention à l'état détaché et à l'état attaché.

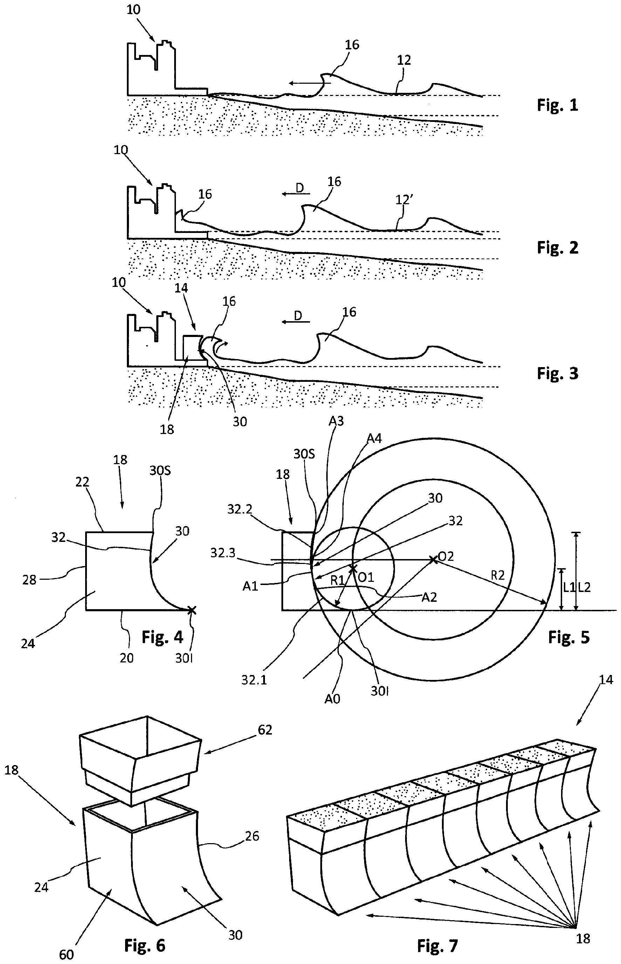

Sur les figures 1 à 3, on a représenté une zone du littoral qui comprend au moins une zone à protéger, comme par exemple un bâtiment 10. Le niveau de l'eau peut évoluer en fonction de la période de la marée et en fonction du coefficient de la marée. Sur la figure 1, on a représenté un niveau d'eau 12 correspondant à la marée haute pour un coefficient de marée important et qui correspond à un premier niveau d'alerte. Pour ce niveau d'alerte, le bâtiment 10 peut résister sans protection.

Comme illustré sur la figure 2, pour un même coefficient de marée, le niveau d'eau 12' est plus élevé au moment de la marée haute en raison d'une surcote (générée par de basses pressions atmosphériques au passage d'une dépression) et/ou d'une houle et/ou d'un vent important. Sans protection, le bâtiment 10 est impacté par les vagues de manière très importante, ce qui peut provoquer d'importants dégâts. Pour protéger le bâtiment 10 ou toute autre zone, une digue de protection 14 est érigée à l'avant, permettant d'absorber une partie de l'énergie des vagues 16, comme illustré sur la figure 3.

La digue de protection 14 s'étend selon une ligne qui peut être droite ou courbe.

Pour la suite de la description, la droite moyenne formée par la digue de protection correspond à la direction longitudinale. La direction transversale est perpendiculaire à la direction longitudinale.

Les vagues se propagent selon une direction de déferlement D qui peut être perpendiculaire à la direction longitudinale.

Selon une configuration, la digue de protection 14 est droite et s'étend selon une direction longitudinale perpendiculaire à la direction de déferlement. Bien entendu, l'invention n'est pas limitée à cette configuration.

La digue de protection 14 comprend une pluralité de dispositifs de protection 18 juxtaposés de manière à former une ligne continue. Pour donner un ordre de grandeur, chaque dispositif de protection a une largeur (dimension prise selon la direction longitudinale) de l'ordre du mètre.

Chaque dispositif de protection 18 comprend une face inférieure 20 configurée pour reposer sur le sol, une face supérieure 22 écartée du sol, deux faces latérales 24, 26, parallèles entre elles et qui s'étendent entre les faces inférieure et supérieure, une face arrière 28 qui est sensiblement perpendiculaire aux faces latérales 24, 26 et qui s'étend entre les faces inférieure et supérieure et une face avant 30 orientée en direction des vagues.

Pour simplifier la description, les faces latérales et arrière 24, 26 et 28 sont sensiblement planes. En réalité, elles sont généralement bombées.

La face avant 30 comprend un bord inférieur 30I relié à la face inférieure 20 et un bord supérieur 30S relié à la face supérieure 22. Selon une configuration, les bords inférieur et supérieur 30I et 30S sont parallèles.

Selon une caractéristique de l'invention, la face avant 30 comprend une forme courbe concave, ladite face avant 30 étant formée par des droites, parallèles entre elles et aux bords inférieur et supérieur 30I, 30S, qui s'appuient sur une ligne courbe 32 qui s'étend dans un plan perpendiculaire aux bords inférieur et supérieur 30I, 30S.

La face avant comprend en partie inférieure une portion courbe configurée pour absorber une partie de l'énergie de la houle et/ou des vagues en déviant l'eau vers le haut et en partie supérieure une portion courbe configurée pour absorber une partie de l'énergie de la houle et/ou des vagues en refoulant l'eau en direction du reflux de la vague.

Selon une caractéristique, la ligne courbe 32 comprend un premier secteur 32.1 qui forme un premier arc de cercle. Selon un mode de réalisation, le premier secteur 32.1 s'étend d'un point A0, positionné sur le bord inférieur 30I, jusqu'à un point A1 tel que le rapport (2×L1/3×L2) est égal à une constante, L2 étant la hauteur totale de la face avant 30, L1 correspondant à la distance entre le point A0 et le centre O1 du premier arc de cercle. Selon un mode de réalisation, le centre O1 du premier arc de cercle est positionné à la verticale du point A0 et à la même hauteur que le point A1 (la droite A1O1 étant horizontale).

Selon une autre particularité du premier secteur 32.1, il comprend un point A2 positionné à environ un tiers de la hauteur L2 de la face avant 30 tel que la direction horizontale et la droite A0A2 forment un angle d'environ 35°.

Ce premier secteur 32.1 est configuré pour absorber une partie de l'énergie de la houle et dévier le mouvement de la houle vers le haut. La forme du premier secteur 32.1 est configurée pour permettre une accumulation de sable en partie inférieure, notamment entre la corde A0A2 et le premier arc de cercle, ce qui contribue à empêcher le bord inférieur 30I de se soulever. Ce dernier point permet d'éviter que du sable ne s'accumule sous le dispositif de protection.

La ligne courbe 32 comprend au moins un deuxième secteur 32.2 qui s'étend jusqu'à un point A3 positionné sur le bord supérieur 30S.

Selon une particularité de la ligne courbe 32, la droite A1A3 forme avec la verticale un angle supérieur à 1°, et de préférence d'environ 5°, le point A3 étant décalé vers le point A0 par rapport à la verticale passant par le point A1.

Ce deuxième secteur 32.2 forme une zone de déflection qui permet de renvoyer l'énergie de la houle vers le large, comme matérialisé par la flèche 34 sur la figure 3.

Selon un mode de réalisation, le deuxième secteur 32.2 décrit un deuxième arc de cercle avec un centre O2 et un rayon R2, O2 étant le centre du cercle permettant d'avoir un angle de 5° sur le deuxième secteur 32.2.

Selon une configuration, la ligne courbe 32 comprend un secteur intermédiaire 32.3 qui assure la continuité entre les premier et deuxième secteurs 32.1 et 32.2 et qui s'étend du point A1 à un point A4. Au point de jonction A1, le premier secteur 32.1 et le secteur intermédiaire 32.3 ont approximativement la même tangente, pour assurer une continuité entre les deux secteurs 32.1 et 32.3. De même, au point de jonction A4, le secteur intermédiaire 32.3 et le deuxième secteur 32.2 ont approximativement la même tangente, pour assurer une continuité entre les deux secteurs 32.3 et 32.2.

Le secteur intermédiaire 32.3 est configuré pour absorber une partie de l'énergie de la houle et accélérer le mouvement ascendant.

Selon l'invention, la face avant 30 est incurvée pour dévier l'eau d'une vague vers le haut puis la rejeter dans la direction du reflux de la vague afin d'absorber une partie de l'énergie d'une première vague et la dévier vers le large, ce qui permet de ralentir et diminuer l'impact de la vague suivante. Une partie de la masse d'eau de la vague est éjectée vers le haut avec un effet de retour. Selon un point important, le retrait de la partie de la masse d'eau non rejetée vers le large est accéléré. Cette accélération du retrait limite la possibilité de surcote et crée un retour décalé permettant de diminuer la force, la vitesse et l'impact de la vague suivante sur la protection.

Selon l'invention, le dispositif de protection comprend au moins une face avant 30 incurvée associée à un sac de grande contenance lesté.

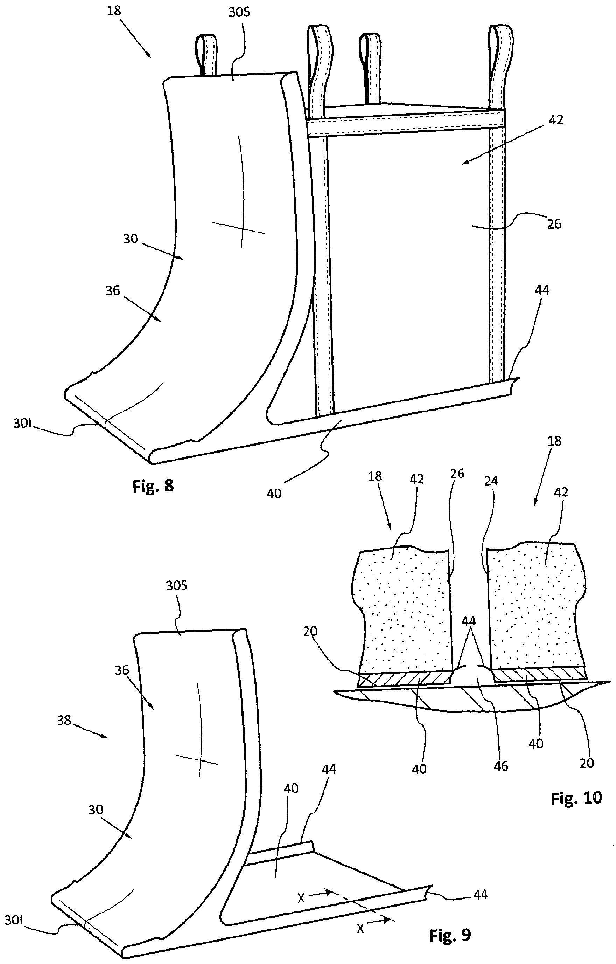

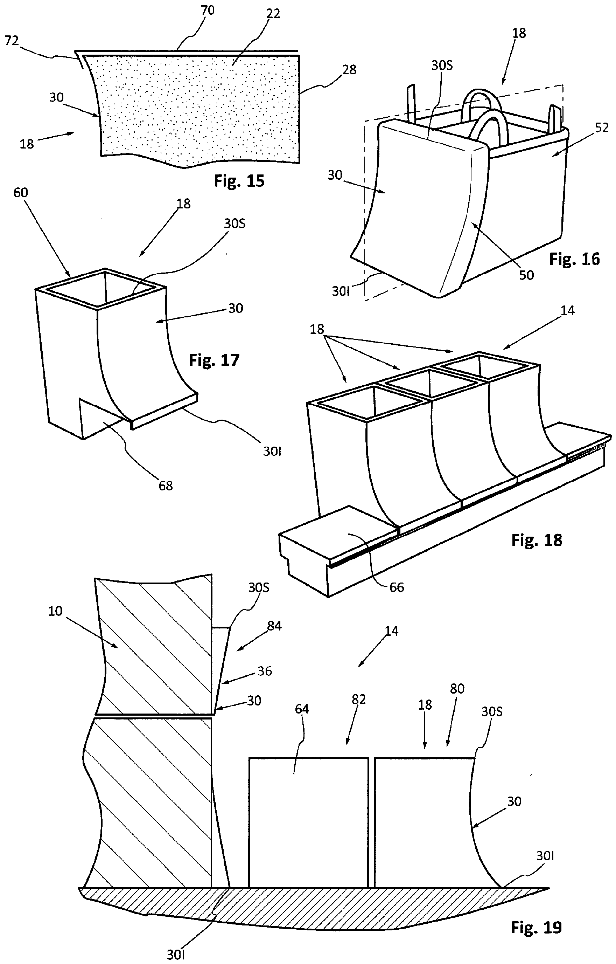

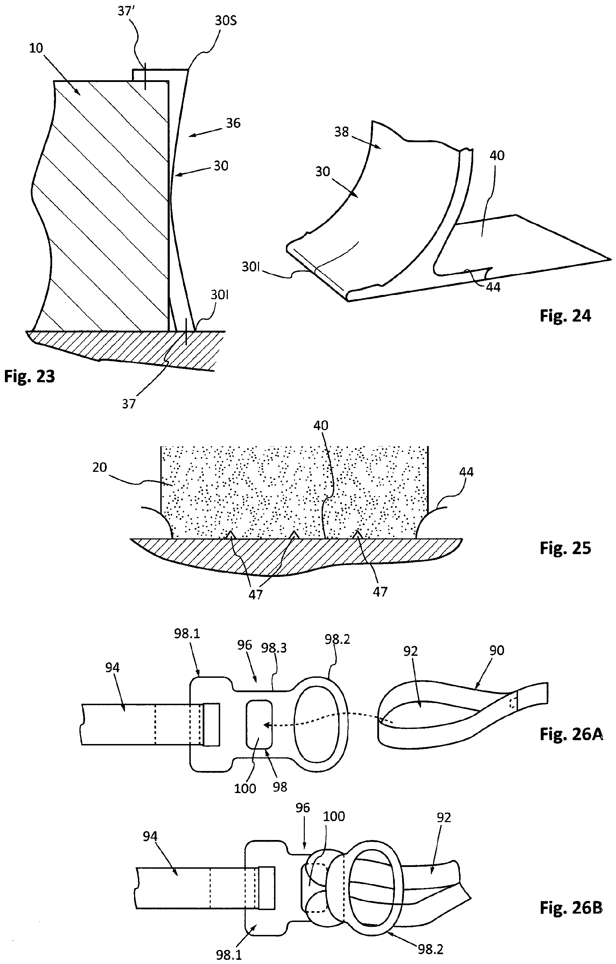

Ainsi, à masse ou volume égal par rapport au seul sac de grande contenance de l'art antérieur, les dispositifs de protection selon l'invention sont configurés pour absorber une plus grande quantité d'énergie en raison de la face avant incurvée 30. Selon des premiers modes de réalisation visibles sur les figures 9 et 19, le dispositif de protection 18 est une plaque 36 dont une face avant 30 est incurvée, la plaque 36 étant distincte du lest ou selon un exemple non-revendiqué étant fixée sur une façade d'un bâtiment 10, comme illustré sur les figures 19 et 23. Selon les exemples visibles sur les figures 19 et 23, la plaque 36 peut avoir une hauteur de l'ordre de 2 à 4 m ou plus. Cependant, la hauteur de la plaque 36 n'est pas limitée. Cette plaque 26 peut être fixée par tout système de liaison approprié sur le bâtiment, comme par exemple des chevilles. Selon une configuration, la plaque 36 est fixée par des systèmes de liaison 37 prévus à proximité du bord inférieur 30I et par des systèmes de liaison 37' prévus à proximité du bord supérieur 30S.

Selon une autre caractéristique, la face avant 30 comprend, sur au moins une partie de sa surface, un état de surface structuré de manière à freiner la montée de l'eau et/ou à accélérer sa descente par exemple.

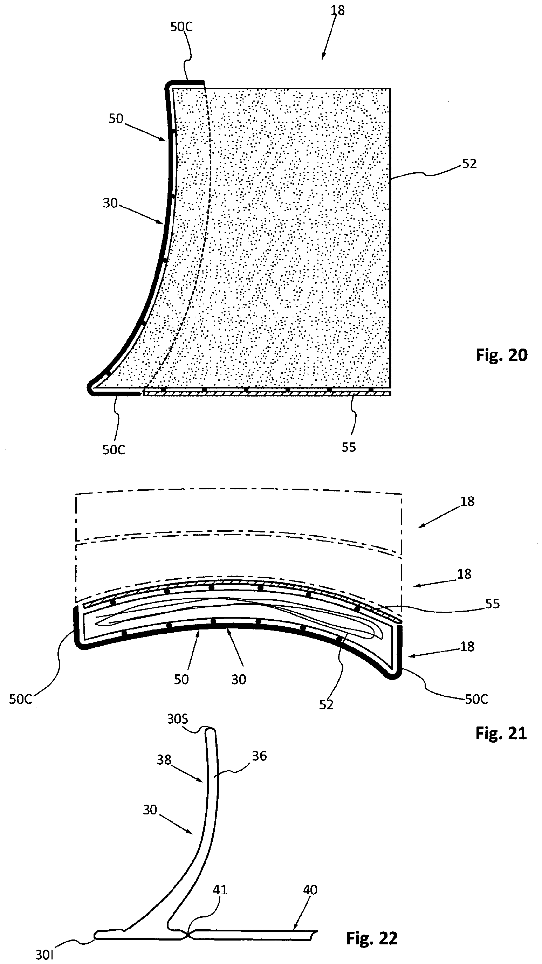

Selon le premier mode de réalisation visible sur les figures 8 à 10, le dispositif de protection 18 comprend un déflecteur 38 qui comprend une première plaque 36 incurvée, dont une face forme la face avant 30 incurvée, et une deuxième plaque 40 reliée à la première plaque 36, sensiblement horizontale, configurée pour reposer au sol. Selon une première variante, les première et deuxième plaques 36 et 40 peuvent être réalisées d'un seul tenant et sont rigides. Selon une autre variante visible sur la figure 22, au moins une partie de la deuxième plaque 40 est réalisée en un matériau plus souple que la première plaque 36 pour pouvoir s'adapter à d'éventuelles irrégularités du sol. Cette deuxième plaque 40 est reliée à la première plaque 36 par une articulation 41 parallèle du bord inférieur 30I positionnée à proximité dudit bord inférieur 30I. les première et deuxième plaques 36 et 40 ainsi que l'articulation 41 sont réalisés d'un seul tenant, l'articulation 41 étant formée par une bande de matière souple et déformable.

Cette deuxième plaque 40 est dimensionnée pour recevoir un sac de grande contenance 42, ce dernier étant en appui contre la face arrière de la première plaque 36. Avantageusement, le sac de grande contenance 42 peut être cubique mais peut aussi n'être pas cubique mais avoir des formes adaptées pour épouser le profil incurvé de la première plaque 36. Avantageusement, le sac de grande contenance 42 est relié au déflecteur 38. Selon un mode de réalisation, la première plaque 36 comprend, au niveau de sa face opposée à la face avant 30, des crochets permettant de relier le sac de grande contenance 42. Toutefois, l'invention n'est pas limitée à ce mode de réalisation. Ainsi, d'autres solutions sont envisageables pour relier le sac de grande contenance 42 au déflecteur 38. De préférence, les systèmes de fixation reliant les sacs de grand contenance aux déflecteurs 38 sont positionnés en partie supérieure du déflecteur 38, à proximité du bord supérieur 30S de la première plaque 36. Avantageusement, chaque sac de grande contenance 42 comprend en partie inférieure une ouverture qui peut être fermée par un lien. Selon une configuration, chaque sac de grande contenance 42 se présente sous la forme d'un tube dont l'extrémité inférieure est refermée en utilisant un lien qui entoure et serre la paroi souple du sac. Ainsi, au départ, les extrémités inférieures des sacs sont fermées et les sacs sont remplis de sable. Lorsque le dispositif de protection est démonté, chaque sac est soulevé et le lien fermant la partie inférieure du sac est retiré de manière à provoquer la vidange du sac par gravité. Selon une configuration, le lien se présente sous la forme d'un bout qui présente deux extrémités qui sont insérées dans un conduit. Ainsi, le bout forme avec le conduit une boucle qui est serrée autour du sac en faisant coulisser le conduit de manière à réduire la dimension de la boucle. Pour immobiliser, le conduit par rapport au bout, un coin est inséré dans le conduit entre les deux brins du bout traversant le conduit. Ce coin est positionné à une extrémité du conduit opposée à celle délimitant la boucle du bout qui serre le sac. Pour desserrer la boucle et ouvrir le sac, il suffit de retirer le coin. Cette action peut être réalisée à distance en reliant le coin à une première extrémité d'un lien et en tirant à l'autre extrémité du lien.

Le sac de grande contenance 42 n'est pas plus détaillé car, à l'exception de la forme, il est sensiblement identique aux sacs de grande contenance de l'art antérieur appelés « big-bags » et comprend des parois souples (fond et parois latérales) et des sangles en partie supérieure pour pouvoir le manutentionner.

De préférence, la deuxième plaque 40 comprend, au niveau des bords latéraux orientés selon la direction transversale, des ailes 44 incurvées, approximativement en quart de cercle, dont les centres sont décalés vers l'extérieur par rapport aux bords latéraux. Ces ailes 44 peuvent permettre de caler le sac de grande contenance 42 selon la direction longitudinale. Lorsque deux dispositifs de protection 18 sont juxtaposés, comme illustré sur la figure 10, les ailes 44 juxtaposées des deux dispositifs de protection 18 délimitent avec le sol un passage 46, avec une section approximativement en demi-disque, pour permettre à l'eau de revenir côté mer en passant au niveau du sol via le passage 46. Selon une première variante visible sur la figure 9, les ailes 44 s'étendent sur toute la longueur de la deuxième plaque 40. Selon une deuxième variante visible sur la figure 24, les ailes 44 s'étendent seulement sur la partie avant (proche du bord inférieur 30I) de la deuxième plaque 40. Cette variante permet de positionner les sacs de grande contenance 42 à cheval sur deux deuxièmes plaques 40 de deux dispositifs de protection juxtaposés.

Selon un autre mode de réalisation visible sur la figure 25, la face inférieure de la deuxième plaque 40 (celle orientée vers le sol) présente au moins une rigole 47, de préférence plusieurs rigoles 47, pour permettre à l'eau de revenir côté mer en passant entre le sol et la deuxième plaque 40.

Le déflecteur 38 peut être réalisé en matière plastique ou en matériau composite ou en tout autre matériau. De préférence, le matériau du déflecteur 38 est choisi pour qu'il puisse être manipulé par une ou deux personnes. En variante, le déflecteur 38 comprend au moins un crochet pour pouvoir le déplacer et le mettre en place avec un engin de levage.

Selon un mode opératoire, les déflecteurs 38 sont positionnés les uns à côté des autres de manière à former une ligne continue. Des sacs de grande contenance 42 lestés, comme par exemple lestés de sable, sont positionnés sur chacun des déflecteurs 38. Bien entendu, l'invention n'est pas limitée aux sacs de grande contenance, les déflecteurs pouvant être lestés par tout autre moyen.

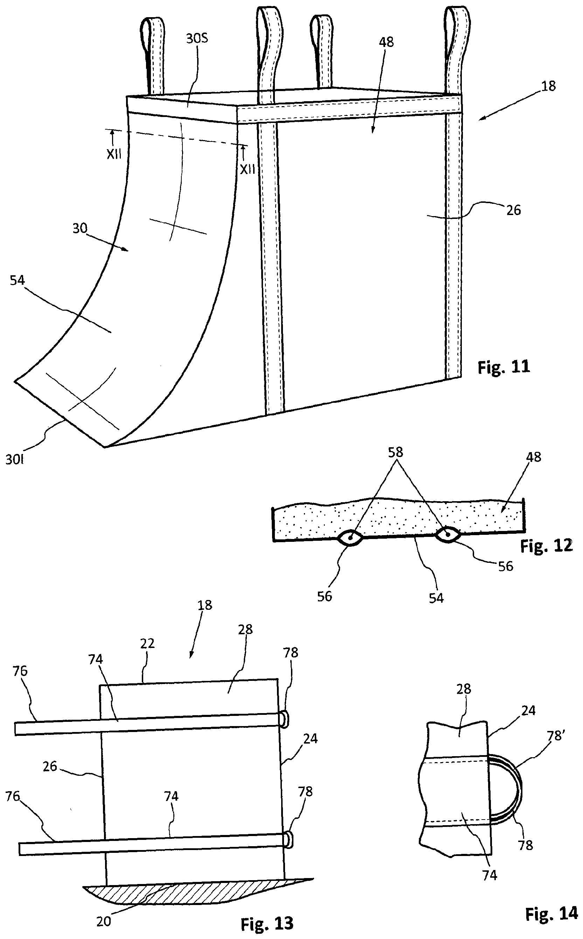

Selon un deuxième mode de réalisation non-revendiqué visible sur la figure 11, le dispositif de protection 18 comprend une face avant 30 qui est solidaire d'un sac de grande contenance 48 et qui correspond à l'une des parois du sac de grande contenance 48.

Selon ce deuxième mode de réalisation, le sac de grande contenance 48 comprend des parois souples, à savoir un fond et des parois latérales dont la géométrie est définie pour former une face avant 30 incurvée.

Selon ce deuxième mode de réalisation, la paroi latérale 54 du sac de grande contenance 48, qui forme la face avant 30, comprend au moins un fourreau 56 disposé dans un plan perpendiculaire aux bords inférieur 30I et supérieur 30S et qui s'étend entre les bords inférieur et supérieur 30I et 30S. Généralement, le sac de grande contenance 48 comprend plusieurs fourreaux 56 parallèles entre eux et répartis le long des bords inférieur et supérieur 30I et 30S. Pour rigidifier la face avant 30, le sac de grande contenance 48 comprend, pour chaque fourreau 56, un raidisseur 58 inséré dans le fourreau 56, le raidisseur 58 étant un élément longiligne rigide dont le profil est adapté en fonction de la courbure souhaitée pour la face avant 30.

Dans ce cas, préalablement au remplissage des sacs de grande contenance, les raidisseurs 58 sont positionnés dans les fourreaux. Une fois remplis, les sacs de grande contenance 48 sont alignés de manière à former la digue de protection.

Selon un troisième mode de réalisation illustré sur les figures 16, 20 et 21, le dispositif de protection 18 comprend une coque rigide 50 qui forme la face avant 30 et qui est solidaire d'un sac de grande contenance 52. La coque rigide 50 est en matériau composite. Elle peut être obtenue par moulage par exemple. Cette coque rigide 50 comprend un fond qui forme la face avant 30 et des parois périphériques 50C positionnées sur les quatre bords de la face avant 30 et qui forment une ceinture périphérique. Le fond et la ceinture périphérique de la coque rigide 50 forment un réceptacle dans lequel peut être plié le sac de grande contenance 52 lorsqu'il est vide.

Selon le troisième mode de réalisation, le dispositif de protection 18 est configuré pour occuper un état déployé lorsque le sac de grande contenance 52 est rempli et lesté, comme illustré sur la figure 20, ou un état replié lorsque le sac de grande contenance 52 est vide comme illustré sur la figure 21. A l'état replié, plusieurs dispositifs de protection 18 peuvent être empilés les uns sur les autres comme illustré sur la figure 21.

Le sac de grande contenance 52 et la coque rigide 50 sont reliés par tout moyen approprié, comme par soudage par exemple.

Pour renforcer son adhérence avec le sol, le dispositif de protection 18 comprend une semelle 55 intercalée entre le sac de grande contenance 52 et le sol. Cette semelle 55 peut être reliée au sac de grande contenance 52 ou à la coque rigide 20 par tout moyen approprié. Cette semelle 55 peut être prévue sur tous les modes de réalisation comportant un sac de grande contenance. Cette semelle 55 est réalisée en un matériau souple pour pouvoir s'adapter à d'éventuelles irrégularités du sol.

Dans le cas du troisième mode de réalisation, la semelle 55 est positionnée et dimensionnée de manière à fermer, à l'état replié, le réceptacle formé par le fond et la ceinture périphérique de la coque rigide 50, comme illustré sur la figure 21.

Les sacs de grande contenance 48, 52 sont lestés, par exemple avec du sable, puis alignés de manière à former une digue de protection.

Selon un autre mode de réalisation non-revendiquée visible sur la figure 6, le dispositif de protection 18 est un contenant rigide 60 qui comprend un fond et des parois latérales qui délimitent une ouverture supérieure pour le lester, l'une des parois latérales du contenant rigide 60 étant configurée pour former la face avant 30 incurvée.

Selon ce mode de réalisation, le dispositif de protection est réalisé en un matériau permettant à une ou deux personnes de la manipuler lorsqu'il est vide. En variante, chaque contenant rigide 60 peut comprendre au moins un point d'accroche pour pouvoir être soulevé et positionné à l'aide d'un engin de levage.

Pour sa mise en œuvre, plusieurs contenants rigides 60 vides sont alignés pour former une digue de protection 14, comme illustré sur la figure 7, puis ils sont remplis avec un lest, comme par exemple du sable.

Selon cet exemple, chaque contenant rigide 60 peut comprendre une rehausse 62 pour augmenter la masse du lest. Cette rehausse 62 comprend des parois latérales qui forment une ceinture et qui sont configurées pour s'emboîter dans l'ouverture supérieure du contenant rigide 60.

Dans le cas des premier et deuxième modes de réalisation, la masse du lest peut être augmentée en ajoutant au moins un sac de grande contenance rempli 64 pour chaque dispositif de protection 14, les sacs de grande contenance étant soit empilés soit positionnés l'un derrière l'autre, comme illustré sur la figure 19.

La partie inférieure du dispositif de protection, à savoir la deuxième plaque 40, le fond du sac de grande contenance 48, 52 ou du contenant rigide 60 n'est pas nécessairement plane, comme illustré sur la figure 17. Ainsi, la partie inférieure du dispositif de protection 18 a des formes adaptées au sol sur lequel elle repose. A titre d'exemple, le sol peut présenter un muret 66 comme illustré sur la figure 18. Dans ce cas, la partie inférieure de chaque dispositif de protection comprend un décrochement 68 configuré pour épouser la forme du muret 66. Selon une autre caractéristique, chaque dispositif de protection comprend un couvercle 70 pour fermer l'ouverture supérieure du sac de grande contenance ou du contenant rigide. Ce couvercle a pour finalité d'empêcher l'eau de pénétrer dans le sac de grande contenance ou le contenant rigide. Selon un mode de réalisation, le couvercle 70 comprend un rebord 72 pour se fixer au sac ou au contenant rigide. Le couvercle 70 peut être solidarisé au sac ou au contenant rigide par tout autre moyen. En complément, le contenant peut comprendre un système de vidange au niveau du fond pour évacuer l'eau.

Selon une autre caractéristique de l'invention, chaque dispositif de protection comprend au moins un système de liaison avec un autre dispositif de protection. Cette caractéristique permet d'éviter l'apparition de brèches dans la digue de protection.

Selon un mode de réalisation adapté au sac de grande contenance, chaque système de liaison comprend une sangle 74 solidarisée au dispositif de protection, plus particulièrement à la face arrière du sac de grande contenance, qui comporte à une première extrémité un prolongement 76, qui s'étend au-delà de la face latérale du sac, et à une seconde extrémité au moins une boucle 78 (ou tout autre système d'attache) pour permettre de relier le prolongement 76 d'une sangle solidarisée à un dispositif de protection adjacent.

Selon une configuration visible sur la figure 14, la seconde extrémité de la sangle 74 comprend deux boucles 78, 78' (ou tout autre système d'attache).

Comme illustré sur la figure 13, chaque dispositif de protection comprend deux sangles 74 sensiblement horizontales, une première sangle positionnée à proximité du haut du sac et une deuxième sangle positionnée à proximité du bas du sac. Dans le cas d'un sac de grande contenance, chaque sangle est cousue sur la face arrière du sac de grande contenance. Lorsque les dispositifs de protection sont alignés, le prolongement 76 de chaque sangle 74 est fixé aux boucles 78 du dispositif de protection adjacent. Cette solution permet, de manière simple et efficace, de relier les dispositifs de protection entre eux.

Sur les figures 26A et 26B, on a représenté un autre mode de réalisation d'un système de liaison.

Chaque sac comprend au niveau d'un premier côté une première sangle 90 qui forme une boucle 92 et au niveau d'un deuxième côté une deuxième sangle 94 qui relie un crochet 96 au sac. Selon un mode de réalisation, le crochet 96 se présente sous la forme d'une plaque 98 qui présente une première extrémité 98.1 reliée à la deuxième sangle 94, une deuxième extrémité 98.2 qui forme une poignée et une partie intermédiaire 98.3 qui comporte un trou 100. La partie intermédiaire 98.3 peut avoir une hauteur inférieure à celle des extrémités 98.1 et 98.2.

Lorsque la boucle 92 n'est pas insérée dans le trou 100, le système de liaison est à l'état détaché, comme illustré sur la figure 26A. Pour relier des premier et deuxième dispositifs de protection, la boucle 92 reliée au premier dispositif de protection est insérée dans le trou 100 du crochet 96 relié au deuxième dispositif de protection, puis la deuxième extrémité 98.2 de la plaque 98 est insérée dans la boucle 92 ayant traversé le trou 100. Ainsi, le système de liaison est à l'état attaché, comme illustré sur la figure 26B. Pour détacher les deux dispositifs de protection, il convient de faire pivoter la plaque 98 (en utilisant la poignée de la deuxième extrémité 98.2) autour de la première extrémité 98.1 de sorte à rapprocher la deuxième extrémité 98.2 du deuxième dispositif de protection. Cette opération permet de détendre les sangles 90, 94 afin de retirer la boucle 92 du trou 100.

D'autres systèmes de liaison sont envisageables pour relier deux dispositifs de protection, comme par exemple un premier bout relié à un premier dispositif de protection, un deuxième bout relié à un deuxième dispositif de protection, un conduit et un coin analogues à ceux utilisés pour fermer l'extrémité inférieure du sac.

Pour former une digue de protection, plusieurs dispositifs de protection sont alignés et positionnés de manière à obtenir une continuité de leurs faces avants 30. Ils sont lestés en fonction des besoins. Ainsi, une première ligne 80 de dispositifs de protection 18 peut être renforcée par une ligne 82 de sacs de grande contenance 64 simple, sans face avant incurvée, afin d'augmenter la masse du lest.

De plus, une deuxième ligne 84 de dispositifs de protection 18, sous forme de plaques incurvées, peut être positionnée à l'arrière de la première ligne 80 de dispositifs de protection pour renforcer la protection d'un bâtiment.

Ainsi, une digue de protection peut comprendre plusieurs lignes de dispositifs de protection qui peuvent être différents d'une ligne à l'autre.

Le nombre de dispositifs de protection est déterminé en fonction de la longueur souhaitée pour la digue de protection. Au moins certains des dispositifs de protection 18 comprennent au moins un contenant lesté positionné à l'arrière de la face avant 30 incurvée.

Les dispositifs de protection selon l'invention peuvent être positionnés rapidement entre deux marées. En fin d'alerte, ils peuvent être rapidement retirés.

Ils sont réutilisables et peuvent être stockés dans un volume restreint lorsque chaque dispositif comprend un sac de grande contenance à paroi souple pour le lester.

## Revendications

1. Dispositif de protection (18) configuré pour être aligné avec d'autres dispositifs de protection de manière à former une digue de protection, **caractérisé en ce que** le dispositif de protection (18) comprend :
- une plaque (36) ou une coque rigide (50) qui présente une face avant (30) incurvée_et configurée pour dévier l'eau d'une vague vers le haut puis la rejeter dans la direction du reflux de la vague, et
- au moins un sac de grande contenance lesté positionné à l'arrière de la face avant (30) incurvée, la plaque (36) ou la coque rigide (50) étant associée au sac de grande contenance lesté.

2. Dispositif de protection selon la revendication précédente, **caractérisé en ce qu'**il comprend un déflecteur (38) qui présente une première plaque (36) dont une face forme la face avant (30) incurvée, et une deuxième plaque (40) reliée à la première plaque (36) et configurée pour reposer au sol et pour recevoir un sac de grande contenance (42), ce dernier étant en appui contre la face arrière de la première plaque (36).

3. Dispositif de protection selon la revendication 2, **caractérisé en ce que** la deuxième plaque (40) comprend, au niveau des bords latéraux, des ailes 44 incurvées et configurées de sorte que, lorsque deux dispositifs de protection (18) sont juxtaposés, les ailes (44) juxtaposées des deux dispositifs de protection (18) délimitent avec le sol un passage (46) pour permettre à l'eau de s'écouler.

4. Dispositif de protection selon la revendication 1, **caractérisé en ce que** la coque rigide (50) est fixée sur l'une des faces du sac de grande contenance (52).

5. Dispositif de protection selon l'une des revendications précédentes, **caractérisé en ce qu'**il comprend au moins un système de liaison avec un autre dispositif de protection qui comporte une sangle (74) solidarisée au dispositif de protection et qui comporte, à une première extrémité, un prolongement (76) qui s'étend au-delà de la face latérale du sac et, à une seconde extrémité, au moins une boucle (78), pour permettre de relier le prolongement (76) d'une sangle solidarisée à un dispositif de protection adjacent.

6. Dispositif de protection selon l'une des revendications précédentes, **caractérisé en ce que** la face avant (30) comprend une forme courbe concave, formée par des droites parallèles entre elles et aux bords inférieur et supérieur (30I, 30S) de la face avant (30) et qui s'appuient sur une ligne courbe (32), qui s'étend dans un plan perpendiculaire aux bords inférieur et supérieur (30I, 30S) et qui comprend un premier secteur (32.1) qui forme un premier arc de cercle et qui s'étend à partir d'un premier point (A0) positionné sur le bord inférieur (30I).

7. Dispositif de protection selon la revendication précédente, **caractérisé en ce que** le premier secteur (32.1) s'étend du premier point (A0) jusqu'à un deuxième point (A1) tel que le rapport 2×L1/3×L2 est égal à une constante, L2 étant la hauteur totale de la face avant (30), L1 correspondant à la distance entre le premier point (A0) et le centre (O1) du premier arc de cercle.

8. Dispositif de protection selon la revendication précédente, **caractérisé en ce que** le premier secteur (32.1) comprend un troisième point (A2), positionné à environ un tiers de la hauteur L2 de la face avant (30), tel que la direction horizontale et la droite passant par les premier et troisième points (A0A2) forment un angle d'environ 35°.

9. Dispositif de protection selon l'une des revendications 6 à 8, **caractérisé en ce que** la ligne courbe (32) comprend au moins un deuxième secteur (32.2) qui s'étend jusqu'à un quatrième point (A3) positionné sur le bord supérieur (30S) de la face avant (30), la droite passant par les deuxième et quatrième points (A1A3) formant avec la verticale un angle supérieur à 1°, et de préférence d'environ 5°, le quatrième point (A3) étant décalé vers le premier point (A0) par rapport à la verticale passant par le deuxième point (A1).

10. Dispositif de protection selon la revendication précédente, **caractérisé en ce que** le deuxième secteur (32.2) est un deuxième arc de cercle.

11. Dispositif de protection selon la revendication précédente, **caractérisé en ce que** la ligne courbe (32) comprend un secteur intermédiaire (32.3) qui assure la continuité entre les premier et deuxième secteurs (32.1, 32.2), le premier secteur (32.1) et le secteur intermédiaire (32.3) ayant approximativement la même tangente au point de jonction (A1) pour assurer une continuité entre les deux secteurs (32.1 et 32.3), le secteur intermédiaire (32.3) et le deuxième secteur (32.2) ayant approximativement la même tangente au point de jonction (A4) pour assurer une continuité entre les deux secteurs (32.3, 32.2).

12. Digue de protection comprenant plusieurs dispositifs de protection, selon l'une des revendications précédentes, qui sont alignés selon au moins une ligne et qui sont positionnés de sorte à obtenir une continuité de leurs faces avants (30).

## Patentansprüche

1. Schutzvorrichtung (18), die dazu eingerichtet ist, mit anderen Schutzvorrichtungen verbunden zu werden, um auf diese Weise einen Schutzdeich zu bilden, **dadurch gekennzeichnet, dass** die Schutzvorrichtung (18) umfasst:
- eine Platte (36) oder eine starre Schale (50), die eine Vorderseite (30) aufweist, die gekrümmt und dazu eingerichtet ist, Wasser einer Welle nach oben abzulenken und diese in Rückflussrichtung der Welle zurückzuwerfen, und
- wenigstens eine beschwerte Tasche mit großem Fassungsvermögen, die hinter der gekrümmten Vorderseite angeordnet ist, wobei die Platte (36) oder starre Schale (50) der beschwerten Tasche mit großem Fassungsvermögen zugeordnet ist.

2. Schutzvorrichtung nach dem vorhergehenden Anspruch, **dadurch gekennzeichnet, dass** diese einen Ablenker (38) aufweist, der über eine erste Platte (36) verfügt, dessen eine Seite die gekrümmte Vorderseite (30) bildet, und über eine zweite Platte (40) verfügt, die mit der ersten Platte (36) verbunden ist und dazu eingerichtet ist, auf dem Untergrund zu ruhen und eine Tasche mit großem Fassungsvermögen (42) aufzunehmen, wobei letztere sich gegen die Rückseite der ersten Platte (36) stützt.

3. Schutzvorrichtung nach Anspruch 2, **dadurch gekennzeichnet, dass** die zweite Platte (40) im Bereich der Seitenränder gekrümmte Stege 44 aufweist, die dazu eingerichtet sind, ein Abfließen des Wassers zu ermöglichen, wenn die nebeneinander geordneten Stege (44) von zwei Schutzvorrichtungen (18) zusammen mit dem Untergrund eine Durchführung (46) bilden.

4. Schutzvorrichtung nach Anspruch 1, **dadurch gekennzeichnet, dass** die starre Schale (50) auf einer der Seiten der Tasche mit großem Fassungsvermögen (52) befestigt ist.

5. Schutzvorrichtung nach einem der vorhergehenden Ansprüche, **dadurch gekennzeichnet, dass** diese wenigstens ein Verbindungssystem mit einer anderen Schutzvorrichtung aufweist, die über einen Gurt (74) verfügt, der an der Schutzvorrichtung angebracht ist, der an einem ersten Ende mit einer Verlängerung (76) versehen ist, die sich über die Seitenwand der Tasche hinaus erstreckt, und der an einem zweiten Ende mit wenigstens einer Schnalle (78) versehen ist, um eine Verbindung mit der Verlängerung (76) eines an einer benachbarten Schutzvorrichtung angebrachten Gurts zu ermöglichen.

6. Schutzvorrichtung nach einem der vorhergehenden Ansprüche, **dadurch gekennzeichnet, dass** die Vorderseite (30) eine gekrümmte konkave Form aufweist, die von zwei untereinander parallelen Geraden am unteren und oberen Rand (30I, 30S) der Vorderseite (30) gebildet ist, die sich auf eine gekrümmte Linie (32) stützen, die sich in einer zum oberen und unteren Rand (30I, 30S) rechtwinkligen Ebene erstrecken und die einen ersten Abschnitt (32.1) aufweist, der einen ersten Kreisbogen bildet und der sich von einem ersten Punkt (A0) erstreckt, der auf dem unteren Rand (30I) angeordnet ist.

7. Schutzvorrichtung nach dem vorhergehenden Anspruch, **dadurch gekennzeichnet, dass** sich der erste Abschnitt (32.1) vom ersten Punkt (A0) bis zu einem zweiten Punkt (A1) derart erstreckt, dass das Verhältnis 2×L1/3×L2 gleich einer Konstanten ist, wobei L2 die Gesamthöhe der Vorderseite (30) ist und L1 dem Abstand zwischen dem ersten Punkt (A0) und dem Zentrum (O1) des ersten Kreisbogens entspricht.

8. Schutzvorrichtung nach dem vorhergehenden Anspruch, **dadurch gekennzeichnet, dass** der erste Abschnitt (32.1) einen dritten Punkt (A2) umfasst, der ungefähr bei einem Drittel der Höhe L2 der Vorderseite (30) derart angeordnet ist, dass die Horizontale und die durch den ersten und dritten Punkt verlaufende Gerade (A0A2) einen Winkel von ungefähr 35° bilden.

9. Schutzvorrichtung nach einem der Ansprüche 6 bis 8, **dadurch gekennzeichnet, dass** die gekrümmte Linie (32) wenigstens einen zweiten Abschnitt (32.2) umfasst, der sich von einem vierten Punkt (A3) erstreckt, der am oberen Rand (30S) der Vorderseite (30) angeordnet ist, wobei die durch den zweiten und vierten Punkt verlaufende Gerade (A1A3) mit der Senkrechten einen Winkel größer 1° bildet, vorzugsweise ungefähr 5°, wobei der vierte Punkt (A3) bezüglich der durch den zweiten Punkt (A1) verlaufenden Senkrechten zum ersten Punkt (A0) hin versetzt ist.

10. Schutzvorrichtung nach dem vorhergehenden Anspruch, **dadurch gekennzeichnet, dass** der zweite Abschnitt (32.2) ein zweiter Kreisbogen ist.

11. Schutzvorrichtung nach dem vorhergehenden Anspruch, **dadurch gekennzeichnet, dass** die gekrümmte Linie (32) einen Zwischenabschnitt (32.3) aufweist, der die Stetigkeit zwischen dem ersten und zweiten Abschnitt (32.1, 32.2) gewährleistet, wobei der erste Abschnitt (32.1) und der Zwischenabschnitt (32.3) näherungsweise die gleiche Tangente am Verbindungspunkt (A1) aufweisen, um Stetigkeit zwischen den beiden Abschnitten (32.1 und 32.2) zu gewährleisten, und wobei der Zwischenabschnitt (32.3) und der zweite Abschnitt (32.2) näherungsweise die gleiche Tangente am Verbindungspunkt (A4) aufweisen, um Stetigkeit zwischen den beiden Abschnitten (32.3, 32.2) zu gewährleisten.

12. Schutzdeich, der mehrere Schutzvorrichtungen nach einem der vorhergehenden Ansprüche aufweist, die entlang wenigstens einer Linie ausgerichtet sind und die so angeordnet sind, dass sich eine Kontinuität ihrer Vorderseiten (30) ergibt.

## Claims

1. Protective device (18) designed to be aligned with other protective devices so as to form a protective dike, **characterized in that** the protective device (18) comprises:
- A plate (36) or a rigid shell (50) which comprises a curved front face (30) and designed to divert the water of a wave upward then drive it back in the direction of the outflow of the wave, and
- at least one weighted large capacity bag positioned behind the curved front face (30), the plate (36) or the rigid shell (50) being associated with the weighted large capacity bag.

2. Protective device according to the preceding claim, **characterized in that** it comprises a deflector (38) which has a first plate (36), a face of which forms the curved front face (30), and a second plate (40) connected to the first plate (36) and designed to rest on the ground and to receive a large capacity bag (42), the latter resting against the back face of the first plate (36).

3. Protective device according to the claim 2, **characterized in that** the second plate (40) comprises, in the area of the side edges, wings (44) that are curved and designed so that, when two protective devices (18) are juxtaposed, the juxtaposed wings (44) of the two protective devices (18) delimit with the ground a passage (46) to make it possible for the water to flow away.

4. Protective device according to Claim 1, **characterized in that** the rigid shell (50) is attached to one of the faces of the large-capacity bag (42).

5. Protective device according to one of the preceding claims, **characterized in that** it comprises at least one system for connecting with another protective device which has a strap (74) that is integral with the protective device, and which has, at a first end, an extension (76) which extends beyond the side face of the bag and, at a second end, at least one loop (78), to make it possible to connect the extension (76) of a strap that is integral with an adjacent protective device.

6. Protective device according to one of the preceding claims, **characterized in that** the front face (30) comprises a concave curved shape, formed by lines parallel to one another and to the lower and upper edges (30I, 30S) of the front face (30) and which are resting on a curved line (32) which extends in a plane perpendicular to the lower and upper edges (30I, 30S) and which comprise a first sector (32.1) which forms a first arc and which extends from a first point (A0), located on the lower edge (301) .

7. Protective device according to the preceding claim, **characterized in that** the first sector (32.1) extends from the first point (A0) to a second point (A1) such that the ratio 2×L1/3×L2 is equal to a constant, L2 being the total height of the front face (30), L1 corresponding to the distance between the first point (A0) and the center (O1) of the first arc.

8. Protective device according to the preceding claim, **characterized in that** the first sector (32.1) comprises a third point (A2), located at about a third of the height L2 of the front face (30), such that the horizontal direction and the line passing through the first and third points (A0A2) form an angle of about 35°.

9. Protective device according to one of the Claims 6 to 8, **characterized in that** the curved line (32) comprises at least a second sector (32.2) which extends up to a fourth point (A3) located on the upper edge (30S) of the front face (30), the line passing through the second and fourth points (A1A3) forming with the vertical an angle greater than 1°, and preferably about 5°, the fourth point (A3) being offset toward the first point (A0) relative to the vertical passing through the second point (A1).

10. Protective device according to the preceding claim, **characterized in that** the second sector (32.2) is a second arc.

11. Protective device according to the preceding claim, **characterized in that** the curved line (32) comprises an intermediate sector (32.3) which ensures the continuity between the first and second sectors (32.1, 32.2), the first sector (32.1) and the intermediate sector (32.3) having approximately the same tangent at the junction point (A1) to ensure a continuity between the two sectors (32.1 and 32.3), the intermediate sector (32.3) and the second sector (32.2) approximately the same tangent at the junction point (A4) to ensure a continuity between the two sectors (32.3, 32.2).

12. Protective dike comprising several protective devices, according to one of the preceding claims, which are aligned and positioned so as to obtain a continuity of their front faces (30).
